# EUROPÄISCHE PATENTSCHRIFT

(11) **EP 2 785 597 B1**
(45) Veröffentlichungstag und Bekanntmachung des Hinweises auf die Patenterteilung: **16.08.2017**
(21) Anmeldenummer: 12775439.8
(22) Anmeldetag: 02.10.2012
(51) Int. Cl.: B65B 17/02, B65B 27/04, B65B 35/44, B65G 47/08

(54) **VORRICHTUNG ZUR BILDUNG VON MEHRREIHIGEN VERPACKUNGSEINHEITEN**
DEVICE FOR FORMING MULTI-ROW PACKING UNITS
DISPOSITIF DE CONFECTION D'UNITÉS D'EMBALLAGE À PLUSIEURS RANGÉES

(30) Priorität: 02.12.2011 DE 102011119968
(43) Veröffentlichungstag der Anmeldung: 08.10.2014
(73) Patentinhaber: KHS GmbH, 44143 Dortmund (DE)
(72) Erfinder: STUHLMANN, Christopher, 34497 Korbach (DE); VAN WICKEREN, Ernst, 47652 Weeze (DE); ZAHN, Volker, 34471 Volkmarsen (DE); NITSCH, Thomas, 47533 Kleve (DE); WAGNER, Stefan, 46509 Xanten (DE)
(86) Internationale Anmeldenummer: PCT/EP2012/004190
(87) Internationale Veröffentlichungsnummer: WO 2013/079134

(56) Entgegenhaltungen:
- DE-A1- 10 163 268
- DE-A1- 19 604 563
- DE-A1-102009 025 824
- US-A- 5 667 055
- US-B1- 7 198 070

## Beschreibung

Die Erfindung bezieht sich auf eine Vorrichtung zur Herstellung von Gebinden gemäß dem Oberbegriff des Patentanspruchs 1, wobei aus einem Behälterstrom oder einer Mehrzahl von Transportgassen umfassend mindestens eine Abteil- und/oder Verdichtungseinheit zum Abteilen und Verdichten einer vorbestimmten Anzahl an Behältern welche jeweils zu einem das spätere Gebinde zusammengefasst werden, wobei Auftragselemente zum Auftragen von Haft- und Klebemittel vorgesehen sind, so dass zumindest einer der Behälter des Gebindes einen Haft- oder Klebemittelauftrag zumindest an einer Kontakt- oder Berührfläche aufweist. Die Behälter können beispielsweise bezüglich ihrer Behälter - und/oder Ausstattungsmerkmale eine willkürliche Orientierung aufweisen

Behälter im Sinne der Erfindung sind beispielsweise Flaschen, Dosen, Tuben, Pouches, jeweils aus Metall, Glas und/oder Kunststoff, also zum Beispiel auch PET-Flaschen, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Derartige Behälter, z.B. PET-Flaschen weisen einen Kontaktbereich auf, welcher sphärisch gewölbt ausgeführt ist, so dass die Behälter quasi aneinander um eine Umfangsbahn, also an einem "Abrollring" abrollen können. Bei Glasflaschen ist dies bei mehrmaligem Gebrauch der Flasche zum Beispiel mittels des meistens in heller Hervorhebung erkennbaren Abnutzungsringes erkennbar. Derartige "Abrollringe" können bei PET-Flaschen nicht nur im Kopfbereich, sondern auch im Fußbereich angeordnet sein.

Im Detail erfolgt die Herstellung der Gebinde z.B. in der Weise, dass die Behälter auf einer Transportebene eines Transporteurs aufstehend und mit ihrer Behälterachse in vertikaler Richtung oder im Wesentlichen vertikaler Richtung orientiert in einem Massentransport bzw. in einem breiten Behälterstrom zugeführt werden, in dem die Behälter hinsichtlich markanter Behälter und/oder Ausstattungsmerkmale eine willkürliche Orientierung aufweisen. Dieser breite Behälterstrom wird dann durch Gasseneinteilung in mehrere einspurige Behälterströme umgewandelt. In weiteren Verfahrensschritten erfolgt das Abteilen der die späteren Gebinde bzw. deren Behältergruppen bildenden Behälter aus den einspurigen Behälterströmen, das Zusammenführen der notwendigen Anzahl von Behältern jeweils zu einer verdichteten Behältergruppe, in der die Behälter mit mehreren Mantel- oder Umfangsflächen, also mit den Kontakt- oder Berührflächen gegeneinander anliegen, und dass Verbinden der Behälter jeder Behältergruppe zu dem kompakten und festen bzw. stabilen Gebinde.

Es ist bekannt, mehrere Artikel jeweils zu einer Artikelgruppe zusammen zu fassen oder zu formieren und aus den Artikelgruppen unter Verwendung von Schrumpffolien (z.B. US 7 726 464 A1) feste bzw. transportfähige Lager- und Transporteinheiten oder Gebinde herzustellen. Nachteilig ist hierbei unter anderem, dass die dabei verwendeten Folien sowie insbesondere das Aufschrumpfen der Folien durch Wärme- oder Energieeintrag nicht unerhebliche Kosten verursacht.

Vorgeschlagen wurde auch bereits, transportfähige Gebinde dadurch herzustellen, dass die jeweils zu einer Behältergruppe formierten Behälter durch eine die Behältergruppe schlaufenartig umgreifende Umreifung (DE 10 2009 025 824 A1, DE 10 2009 044 271 A1, DE 41 26 212 A1) verpackt, d.h. miteinander zu einem Gebinde verbunden werden, was eine besonders kostengünstige und einfache Möglichkeit zur Herstellung von Gebinden bzw. Transport- und Lagereinheiten darstellt. Die Umreifung kann auch mit den Behältern verklebt werden. Nachteilig bei der Umreifung ist allerdings, dass beim ersten Entnehmen eines Behälters aus einem solchen Gebinde die in dem Gebinde verbliebenen Behälter durch die Umreifung nicht mehr zusammengehalten werden. Dies gilt nicht nur dann, wenn die Umreifung getrennt oder zerschnitten wird, sondern auch dann, wenn es möglich ist, ohne Durchtrennen der Umreifung einen Behälter aus dem Gebinde zu entnehmen.

Weiterhin besteht beim Transport derartiger Gebinde auf einem Bandfördermittel immer die Gefahr, dass sich zylindrische oder weitgehend zylindrische Artikel, wie Dosen, Flaschen oder Behälter durch Vibration, Stöße etc. eine nestende Position einnehmen, also in die Lücke der Nachbarreihe rutschen. Um dies zu verhindern muss bei bekannten Gebinden eine sehr große Spannung auf die Umreifung gebracht werden.

Die DE 10 2006 037 105 A1 dagegen befasst sich mit einem Verfahren zum Zusammenstellen von Flaschenpaketen, bei welchem auf beiden Seiten einer Bahn ein Drehstern vorgesehen wird, welcher Flaschenhälse in Klammern an Flachträgern hineindrückt. Das Flaschenpaket wird noch mit einem Band oder einer Umhüllung (Folie) umfasst.

Die US 5,667,055 A offenbart eine Vorrichtung zum Ausrichten und/oder zum Abteilen oder Verdichten von nebeneinander angeordneten Artikeln in Längsrichtung einer Transportvorrichtung, wobei die Vorrichtung insbesondere für eine Verpackungslinie von Dosen, Flaschen und ähnlichen Artikeln geeignet ist. Dazu weist die Vorrichtung mehrere quer zur Förderrichtung der Transportvorrichtung verlaufende, angetriebene Schubstangen auf, die jeweils eine Querreihe von Artikeln entlang der Förderrichtung der Vorrichtung in ihrer Bewegung beeinflussen und insbesondere vorwärts schieben können.

Gemäß der DE 23 31 193 wird an Behälter ein Klebemittel in schmalen Flächen oder Reihen angebracht, wobei jeweils benachbarte Flächen, welche nicht mit Klebemittel versehen sind, ein Greifen der Packung zum Zwecke des Tragens ermöglichen soll. An den Klebestellen kleben die Behälter aneinander. Die EP 2 096 039 A1 offenbart ebenfalls Behälter mit einem Klebemittel zu versehen, wobei aber zudem noch eine Schrumpffolie um das Flaschenpaket angeordnet wird.

Aufgabe der Erfindung ist es, eine Vorrichtung zum Herstellen von Gebinden der Eingangs genannten Art anzugeben, bei dem trotz des Verzichts auf eine umgreifende Folie und/oder trotz des Verzichts auf eine Umreifung in einfacher Weise stets vermieden ist, dass die Artikel bei dem Transport in eine nestende Position gelangen, wobei auch nach der Entnahme eines oder mehrerer Artikel aus einem Gebinde der Zusammenhalt der verbliebenen Artikel im Gebinde erhalten bleibt bzw. wieder hergestellt werden kann.

Zur Lösung dieser Aufgabe ist eine Vorrichtung zur Herstellung von Gebinden ohne eine Folie und/oder ein Umreifungsband entsprechend dem Patentanspruch 1 ausgebildet, wobei zumindest ein Lineartransporteur vorgesehen ist, auf welchem die das spätere Gebinde bildende Gruppe von Behältern von einer Eingangsseite in Richtung zu einer Austragseite transportierbar sind, wobei die Auftragselemente zum spritzenden oder sprühenden Auftragen eines flüssigen oder fließfähigen Haft- oder Klebemitteln im Bereich des Lineartransporteurs vorgesehen sind, und wobei statische und/oder bewegliche Führungselemente jeweils seitlich des Lineartransporteurs vorgesehen sind, und wobei Mitnehmerelemente vorgesehen sind, welche jeweils einem Gebinde zugeordnet sind.

Behälter im Sinne der Erfindung sind, z.B. PET-Flaschen, d.h. u.a. Flaschen, Dosen Tuben, Pouches, jeweils aus Metall, Glas und/oder Kunststoff, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Die Behälter des Gebindes sind in nicht-nestender Position angeordnet.

"Haft- oder Klebemittel" in Sinne der Erfindung sind u.a. alle Materialien oder Massen, mit denen eine Klebeverbindung zwischen Behältern möglich ist, insbesondere Verbindungen, Materialien oder Massen, die im flüssigen oder zähflüssigen Zustand aufgebracht einen selbstklebenden Auftrag bilden und/oder unter Anwendung von Druck und/oder durch Energieeintrag und/oder nach einem Aushärten oder Vernetzen (auch durch Energieeintrag) eine Klebeverbindung bewirken. "Haft- oder Klebemittel" in Sinne der Erfindung sind u.a. auch Mehrschichtmaterialien, z.B. solche aus wenigstens einem Trägermaterial, welches mit einem Material beschichtet ist, mit dem eine Klebeverbindung zwischen Behältern möglich ist, also mindestens zweiseitig haftend- und/oder klebend aktiv sind. Ein "klebender" Behälter weist im Sinne der Erfindung Haft- oder Klebemittel auf, bzw. ist mit einem Haft- und Klebemittelauftrag versehen. Das Haft- oder Klebemittel ist bevorzugt derart gewählt, dass die Behälter händisch und zerstörungsfrei aus dem Gebinde lösbar bzw. voneinander trennbar sind. Besonders bevorzugt ist zur Lösung der, der Erfindung zugrunde liegenden Aufgabe vorgesehen, dass flüssiges Klebemittel von den Auftragselementen aufgetragen wird. Besonders zielführend ist dabei, wenn ein niedrigviskoser UV-aushärtender Klebstoff aufgetragen wird. Geeignet wäre auch ein Heizleim, welcher jedoch sehr schnell abkühlt, und so eventuell seine Klebeigenschaften aufgeben könnte, bevor die Behälter des Gebindes hinreichend miteinander verklebt sind. Ein UV-aushärtender Klebstoff ist auch vorteilhaft hinsichtlich der besonders leichten Einstellung seiner gewünschten Eigenschaften. Eine entsprechende Aushärtstation bzw. eine Aushärtstrecke ist in sinnvoller Weise stromab der Auftragselemente stationär oder entlang des Lineartransporteurs oberhalb bzw. gegebenenfalls auch unterhalb vorgesehen.

Das Gebinde kann in Transportrichtung gesehen mehrreihig, also beispielhaft zweireihig oder z.B. dreireihig ausgeführt sein, wobei jeweils eine entsprechende Anzahl an Behälterreihen quer zur Transportrichtung gesehen angeordnet sind. Bevorzugt ist, wenn ein Gebinde sechs Behälter aufweist, wobei entweder drei hintereinander angeordnete Behälter in zwei Reihen, oder zwei hintereinander angeordnete Behälter in drei Reihen angeordnet sind. Möglich ist, wenn der Lineartransporteur eine quer zur Transportrichtung durchgehende Aufstandsfläche aufweist, welcher der Gesamtbreite der betreffenden Behälterreihe entspricht. In bevorzugter Ausgestaltung kann der Lineartransporteur jeweils eine Transportfläche für jeweils eine betreffende Behälterreihe aufweisen. So kann der Lineartransporteur zwei Transportflächen (zwei Behälterreihen) oder drei Transportflächen (drei Behälterreihen) aufweisen, welche quer zur Transportrichtung gesehen zueinander beabstandet sind, also jeweils einen Spalt zwischen sich aufweisen, was bezüglich des Klebemittelauftrages günstig ist, worauf noch eingegangen wird. Der Lineartransporteur selbst kann angetrieben sein, um die Behälter von der Eingangsseite zur Austragseite zu fördern.

Zum Auftragen des bevorzugt flüssigen, also niedrigviskosen Klebemittels, mit der besonders bevorzugten Eigenschaft als UV-aushärtender Klebstoff sind die Auftragselemente vorgesehen, welche als Auftragskopf bzw. als Spritzkopf ausgeführt sein können. Günstig ist, wenn mehrere Auftragselemente vorgesehen sind, welche eingangsseitig mit kongruenter Mittelachse zueinander, also auf einer Linie angeordnet sind. In bevorzugter Ausgestaltung sind mehrere beispielsweise sechs oder z.B. acht Auftragselemente vorgesehen, welche so angeordnet werden können, dass jeder Behälter an seinen Kontakt- und Berührflächen quasi mit Klebstoff umrahmt wird. Eine, oder je nach der Anzahl an Behälterreihen, zwei oder noch mehr Auftragselemente sind unterhalb des Lineartransporteurs angeordnet, und tragen den Klebstoff durch den oben erwähnten, jeweiligen Spalt zwischen den Transportflächen von "unten" auf die Kontakt- und Berührflächen der Behälter auf. Zudem sind kopfseitig ebenfalls Auftragselemente vorgesehen, wobei die Anzahl zu den "unten" angeordneten bevorzugt identisch ist. Weiter sind Auftragselemente vorgesehen, welche jeweils seitlich zum Lineartransporteur angeordnet sind. Die an einer gemeinsamen Seite angeordneten Auftragselemente sind in Hochrichtung der Behälter zueinander beabstandet, wobei ein Auftragselement kopfseitig und das andere fußseitig angeordnet ist. Wesentlich ist gleichwohl, dass mit den Auftragselementen die Kontakt- und Berührflächen mit flüssigem Klebstoff versehen werden. Möglich ist, die Auftragselemente starr, also unbeweglich zu lagern. In weiterer Ausgestaltung ist denkbar, dass die Auftragselemente zumindest entlang einer Teilstrecke mit dem betreffenden Gebinde mitfahren, um so dann in die Ausgangsposition zurückgeführt zu werden und ein neues Gebinde bzw. dessen Behälter an den Kontakt- und Berührflächen mit Klebstoff zu versehen.

Die Führungselemente können auch als Geländer bezeichnet werden, welche die Gebinde, bzw. die Behälter des Gebindes zwischen sich führen bzw. stützen. Denkbar ist, die Führungselemente starr auszuführen. Möglich ist aber auch, die Führungselemente mitlaufend auszuführen, so dass die Behälter bzw. die Gebinde keine Relativgeschwindigkeit zu den seitlich angeordneten Führungselementen aufweisen. Mit den seitlich angeordneten Führungselementen kann ein seitlicher Druck erzeugt werden, welcher einer Klebverbindung der Behälter des Gebindes zweckdienlich ist. Mit anderen Worten haben die Führungselemente nicht nur die Funktion des Führens und Stützens sondern auch noch die Funktion eine auf die Behälter wirkende Kraft zu erzeugen, welche die Behälter bzw. das Gebinde quer zur Transportrichtung gesehen verdichtet, bzw. einander annähert, gegeneinander drückt oder anpresst, um so eine hinreichende Klebverbindung bewirken zu können.

In bevorzugter Ausgestaltung sind die Mitnehmerelemente quer zur Transportrichtung angeordnet, und übergreifen den Lineartransporteur vollständig, wobei die Mitnehmerelemente in Transportrichtung gesehen hinter dem Gebinde angeordnet, so dass die Mitnehmerelemente das Gebinde quasi vor sich herschieben. Hierdurch wird vorteilhaft eine Kraft erzeugt, welche eine Verbindung der Behälter untereinander in oder entgegen der Transportrichtung gesehen, bzw. eine Verdichtung unterstützt. Um den Verbund der Behälter des Gebindes untereinander nicht nur quer zur Transportrichtung, sondern auch in Transportrichtung gesehen zu verbessern, können die Mitnehmer in Transportrichtung gesehen eine bezüglich des Transporteurs bewirkende Relativgeschwindigkeit auf die Behälter bzw. auf das Gebinde aufbringen. Ist die Fördergeschwindigkeit des bzw. der Mitnehmerelemente größer als die Fördergeschwindigkeit des Lineartransporteurs, bewirkt dies ein Schieben bzw. Gleiten der Behälter bzw. des Gebindes von der Eingangsseite in Richtung zur Austragsseite. Ersichtlich ist, dass die Schiebekraft den Klebverbund deutlich erhöhen kann. Die Mitnehmerelemente können in bevorzugter Ausgestaltung als Stab, also als Mitnehmerstab ausgeführt sein. Weiter können die Mitnehmerelemente selbst angetrieben sein, und/oder mit den Führungselementen in Verbindung stehen. Insofern könnten die Führungselemente zu den bereits genannten Funktionen quasi noch die Führungsfunktion für die Mitnehmerelemente übernehmen. Sind die Führungselemente angetrieben, also umlaufend vorgesehen, liegt es durchaus im Sinne der Erfindung, die Mitnehmerelemente starr an den Führungselementen zu befestigen, wobei die oben erwähnte Relativgeschwindigkeit mittels des Führungselementenantriebes erzeugt werden könnte. Die Führungselemente könnten auch in Querrichtung betrachtet einstellbar sein, so dass die Vorrichtung auch auf unterschiedliche Behälterdimensionen einstellbar ist. Die Fördergeschwindigkeit des Lineartransporteurs, der Führungselemente und/oder der Mitnehmerelemente kann individuell einstellbar sein, wozu geeignete Steuerzentralen bzw. Zentrale Steuereinheiten einer Gesamtanlage herangezogen werden können.

Möglich ist, das Gebinde noch mit einem Trageelement, beispielsweise mit einem Griff zu versehen, wozu geeignete Vorrichtungen vorgesehen werden können, welche stromab der Austragsseite oder an geeigneter Stelle an dem Lineartransporteur angeordnet ist. Natürlich kann das Tragelement mit dem zuvor genannten Haft- oder Klebemittel an dem Gebinde befestigt werden.

Mit der Erfindung wird so eine Vorrichtung zur Herstellung eines mehrreihigen Gebindes zur Verfügung gestellt, welche trotz des Verzichts auf eine umgreifende Folie und/oder trotz des Verzichts auf eine Umreifung in einfacher Weise vermeidet, dass die Behälter bei dem Transport in eine nestende Position gelangen, wobei auch nach der Entnahme eines oder mehrerer Behälter aus einem Gebinde der Zusammenhalt der verbliebenen Behälter im Gebinde erhalten bleibt bzw. wieder hergestellt werden kann. Durch den Verzicht auf eine Folie oder ein Umreifungsband (folienloser Flaschenpack), wird die Umwelt durch Vermeidung von Abfall entlastet, wobei so auch Ressourcen zur Herstellung der meist aus Kunststoff hergestellten Folien oder Unreifungen geschont werden. Die Behälter eines Gebindes werden während des Transportes, also im kontinuierlichen Betrieb der Vorrichtung zur Herstellung von Gebinden, bzw. der Verpackungsmaschine direkt aneinander geklebt. Vorteilhaft ist auch, dass die einzelnen Behälter nicht verdreht werden müssen, um z.B. den Klebstoff hinreichen auftragen zu können. Zudem ist ein folienloser Flaschenpack bei minimalem Klebemittelauftrag erreichbar, welcher eine hinreichende Bindung der einzelnen Behälter zueinander aufweist.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
Fig. 1 einen Teilabschnitt einer Vorrichtung zum Herstellen eines Gebindes mit sechs Artikeln bzw. Behältern in einer perspektivischen Ansicht,
Fig. 2 den Teilabschnitt aus Figur 1 in einer Seitenansicht,
Fig. 3 eine Einzelheit des Teilabschnitts aus Figur 1 zur Darstellung der Auftragselemente,
Fig. 4 den Teilabschnitt aus Figur 1 in einer Aufsicht, und
Fig. 5 einen Teilabschnitt einer Vorrichtung zum Herstellen eines Gebindes mit sechs Artikeln bzw. Behältern mit zu Figur 1 unterschiedlicher Reihenanordnung in Aufsicht.

In den unterschiedlichen Figuren sind gleiche Teile stets mit denselben Bezugszeichen versehen, weswegen diese in der Regel auch nur einmal beschrieben werden. Im Folgenden werden Artikel als Behälter bezeichnet.

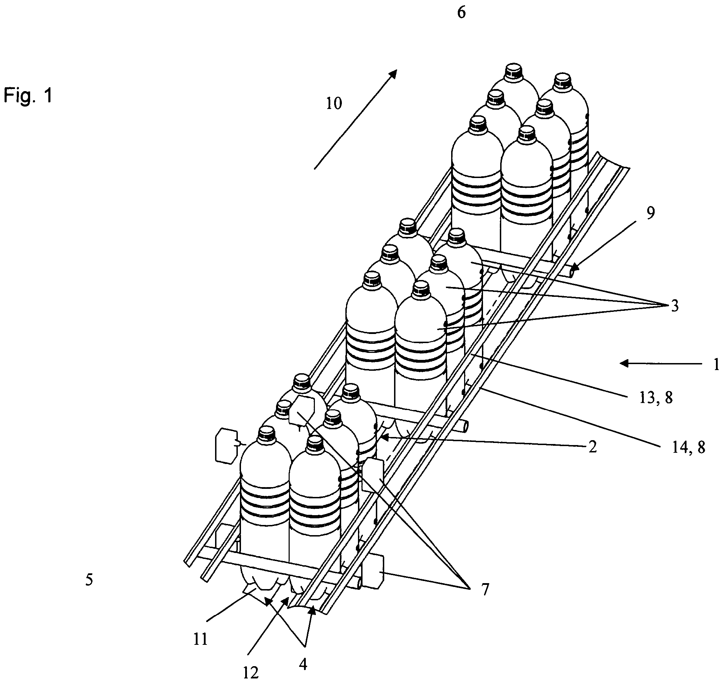

Figur 1 zeigt einen Teilabschnitt einer Vorrichtung 1 zur Herstellung von Gebinden 2 aus Behältern 3, wobei im Vorfeld aus einem Behälterstrom, in welchem die Behälter 3 beispielsweise bezüglich ihrer Behälter - und/oder Ausstattungsmerkmale eine willkürliche Orientierung aufweisen, durch Abtrennen und Zusammenführen einer vorbestimmten Anzahl an Behältern 3, also beispielsweise sechs Behälter 3, verdichtete oder formierte Behältergruppen gebildet und nachfolgend jeweils zu dem Gebinde 2 zusammengefasst werden, wobei zumindest einer der Behälter 3 des Gebindes 2, bevorzugt jeder Behälter 3 ein Haft- oder Klebemittel und/oder einen Haft- oder Klebemittelauftrag zumindest an einer Kontakt- oder Berührfläche aufweist. Die Kontakt- und Berührflächen sind in den Figuren eindeutig durch Anlage der Behälter 3 aneinander erkennbar, aber nicht mit einem Bezugszeichen versehen.

Vorteilhaft ist ein Lineartransporteur 4 vorgesehen, auf welchem die Behälter 3 bzw. die formierten Gebinde 2 von einer Eingangsseite 5 in Richtung zu einer Austragseite 6 transportiert werden, wobei Auftragselemente 7 zum Auftragen von Haft- oder Klebemitteln eingangsseitig des Transporteurs 4 vorgesehen sind, und wobei Führungselemente 8 jeweils seitlich des Transporteurs 4 angeordnet sind, und wobei Mitnehmerelemente 9 vorgesehen sind, welche jeweils einem Gebinde 2 zugeordnet sind. Die Transportrichtung von der Eingangsseite 5 in Richtung zur Austragseite 6 ist mittels des Pfeils 10 dargestellt.

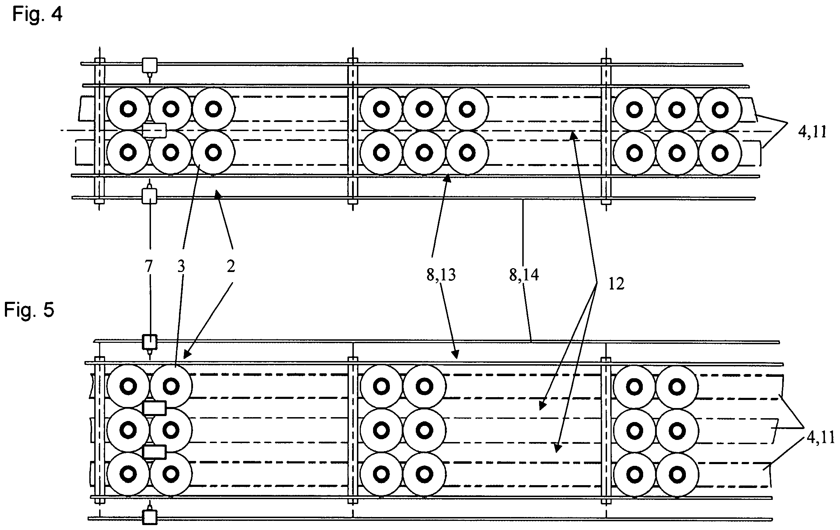

Das Gebinde 2 kann in Transportrichtung 10 gesehen mehrreihig, also beispielhaft zweireihig (Figur 4) oder z.B. dreireihig (Figur 5) ausgeführt sein, wobei jeweils eine entsprechende Anzahl an Behälterreihen quer zur Transportrichtung 10 gesehen angeordnet sind.

Möglich ist, wenn der Lineartransporteur 4 eine quer zur Transportrichtung 10 durchgehende Aufstandsfläche aufweist, welcher der Gesamtbreite der betreffenden Behälterreihe entspricht.

In bevorzugter Ausgestaltung hat der Lineartransporteur 4 jeweils eine Transportfläche 11 für jeweils eine betreffende Behälterreihe. So kann der Lineartransporteur 4 zwei Transportflächen 11 (Figur 4) oder drei Transportflächen 11 (Figur 5) aufweisen, welche quer zur Transportrichtung 10 gesehen zueinander beabstandet sind, also jeweils einen Spalt 12 zwischen sich aufweisen.

Der Lineartransporteur 4 selbst kann angetrieben sein, um die Behälter 3 von der Eingangsseite 5 zur Austragseite 6 zu fördern.

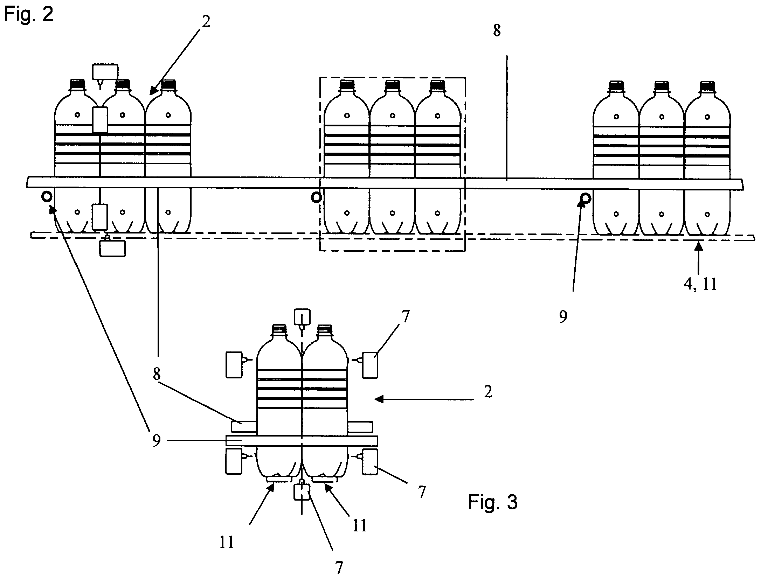

Zum Auftragen des bevorzugt flüssigen, also niedrigviskosen Klebemittels, mit der besonders bevorzugten Eigenschaft als UV-aushärtender Klebstoff sind die Auftragselemente 7 vorgesehen, welche als Auftragskopf bzw. als Spritzkopf ausgeführt sind. Günstig ist, wenn mehrere Auftragselemente 7 vorgesehen sind, welche eingangsseitig mit kongruenter Mittelachse zueinander, also auf einer Linie angeordnet sind, wie in Figur 3 am besten zu erkennen ist.

In bevorzugter Ausgestaltung sind mehrere beispielsweise sechs (Figur 4) oder z.B. acht (Figur 5) Auftragselemente 7 vorgesehen, welche so angeordnet werden können, dass jeder Behälter 3 an seinen Kontakt- und Berührflächen quasi mit Klebstoff umrahmt wird. Sinnvoll ist, wenn jedem Spalt 12 auch jeweils ein Auftragselement 7 aufweist.

Eine, oder je nach der Anzahl an Behälterreihen, zwei oder noch mehr Auftragselemente 7 sind unterhalb des Lineartransporteurs 4 angeordnet, und tragen den Klebstoff durch den oben erwähnten, jeweiligen Spalt 12 zwischen den Transportflächen 11 von "unten" auf die Kontakt- und Berührflächen der Behälter 3 auf. Zudem sind kopfseitig ebenfalls Auftragselemente 7 vorgesehen, wobei die Anzahl zu den "unten" angeordneten bevorzugt identisch ist. Weiter sind Auftragselemente 7 vorgesehen, welche jeweils seitlich zum Lineartransporteur 4 angeordnet sind. Die an einer gemeinsamen Seite angeordneten Auftragselemente 7 sind in Hochrichtung der Behälter 2 zueinander beabstandet, wobei ein Auftragselement 7 kopfseitig und das andere fußseitig angeordnet ist.

Bei dem in Figur 4 dargestellten Ausführungsbeispiel ist "oben" und "unten" jeweils ein Auftragselement 7 vorgesehen, wobei bei dem Ausführungsbeispiel nach Figur 5 sinnvoller Weise "oben" und "unten" jeweils zwei Auftragselemente 7 vorgesehen sind. Bei anderer Reihenanzahl oder Anordnung können die Auftragselemente 7 in ihrer Anzahl genauso angepasst werden.

In dem dargestellten Ausführungsbeispiel sind die Auftragselemente 7 starr, also unbeweglich an der Vorrichtung 1 angeordnet. In weitere Ausgestaltung ist denkbar, dass die Auftragselemente 7 gemeinsam oder vereinzelt zumindest entlang einer Teilstrecke mit dem betreffenden Gebinde 2 mitfahren, um so dann in die Ausgangsposition zurückgeführt zu werden und ein neues Gebinde 2 bzw. dessen Behälter 3 an den Kontakt- und Berührflächen mit Klebstoff zu versehen.

Die Führungselemente 8 können auch als Geländer bezeichnet werden, welche die Gebinde 2, bzw. die Behälter 3 des Gebindes 2 zwischen sich führen bzw. stützen. Denkbar ist, die Führungselemente 8 starr auszuführen. Möglich ist aber auch, die Führungselemente 8 mitlaufend auszuführen, so dass die Behälter 3 bzw. die Gebinde 2 keine bzw. eine einstellbare Relativgeschwindigkeit zu dem Lineartransporteur 4 aufweisen. Mit den seitlich angeordneten Führungselementen 8 kann ein seitlicher Druck erzeugt werden, welcher einer Verdichtung bzw. Klebverbindung der Behälter 3 des Gebindes 2 zweckdienlich ist.

Mit anderen Worten haben die Führungselemente 8 nicht nur die Funktion des Führens und Stützens, sondern auch noch die Funktion eine auf die Behälter 3 wirkende Kraft zu erzeugen, welche die Behälter 3 des Gebindes 2 quer zur Transportrichtung 10 gesehen verdichtet, bzw. einander annähert, gegeneinander drückt oder anpresst, um so eine hinreichende Klebverbindung bewirken zu können. Die jeweils seitlich angeordneten Führungselemente 8 können als parallel zum Lineartransporteur 4 angeordnete Einzelelemente bzw. senkrecht angeordnete Bleche ausgeführt sein. Wie der Figur 1 in Zusammenschau mit der Figur 2 entnommen werden kann, kann das jeweilige Führungselement 8 auch mit einem Innenelement 13 ausgeführt sein, welches parallel zu einem Außenelement 14 angeordnet ist, wobei endseitig jeweils Verbindungen zwischen den Elementen 13 und 14 vorgesehen werden können.

In bevorzugter Ausgestaltung sind die Mitnehmerelemente 9 quer zur Transportrichtung 10 angeordnet, und übergreifen den Lineartransporteur 4 vollständig, wobei die Mitnehmerelemente 9 in Transportrichtung 10 gesehen hinter dem Gebinde 2 angeordnet sind, so dass die Mitnehmerelemente 9 das Gebinde 2 quasi vor sich herschieben. Hierdurch wird vorteilhaft eine Kraft erzeugt, welche eine Verbindung der Behälter 3 untereinander in oder entgegen der Transportrichtung 10 gesehen, bzw. eine Verdichtung unterstützt.

Um den Verbund der Behälter 3 des Gebindes 2 untereinander nicht nur quer zur Transportrichtung 10, sondern auch in (oder entgegen) der Transportrichtung 10 gesehen zu verbessern, können die Mitnehmer 9 in Transportrichtung 10 gesehen eine bezüglich des Lineartransporteurs 4 bewirkende Relativgeschwindigkeit auf die Behälter 3 bzw. auf das Gebinde 2 aufbringen. Ist die Fördergeschwindigkeit des bzw. der Mitnehmerelemente 9 größer als die Fördergeschwindigkeit des Lineartransporteurs 4, bewirkt dies ein Schieben bzw. Gleiten der Behälter 3 bzw. des Gebindes 2 von der Eingangsseite 5 in Richtung zur Austragsseite 6.

Die Mitnehmerelemente 9 können in bevorzugter Ausgestaltung als Stab, bevorzugt als Rundstab (Figuren 1 und 2) also als Mitnehmerstab ausgeführt sein. Weiter können die Mitnehmerelemente 9 selbst angetrieben sein, und/oder mit den Führungselementen 8 in Verbindung stehen. Sind die Mitnehmerelemente 9 angetrieben, können diese mit Gleit- oder Rollmitteln an den Führungselementen 8 entlang gleiten oder rollen. Dabei könne die Mitnehmerelemente 9 über Zugmittel (Seil, Kette, Zahnriemen oder dergleichen) miteinander verbunden sein, so dass quasi umlaufende Mitnehmerelemente 9 gebildet sind.

Sind die Führungselemente 8 angetrieben, also umlaufend vorgesehen, liegt es durchaus im Sinne der Erfindung, die Mitnehmerelemente 9 starr an den Führungselementen 8 zu befestigen, wobei die oben erwähnte Relativgeschwindigkeit mittels des Führungselementenantriebes erzeugt werden könnte.

### Bezugszeichenliste:

- 1: Vorrichtung zur Herstellung von Gebinden
- 2: Gebinde
- 3: Behälter
- 4: Lineartransporteur
- 5: Eingangsseite
- 6: Austragseite
- 7: Auftragselement
- 8: Führungselement
- 9: Mitnehmerelement
- 10: Transportrichtung
- 11: Transportfläche
- 12: Spalt
- 13: Innenelement von 8
- 14: Außenelement von 8

## Patentansprüche

1. Vorrichtung zur Herstellung eines mehrreihigen Gebindes (2) ohne eine Folie und/oder ein Umreifungsband, wobei aus einem Behälterstrom oder einer Mehrzahl von Transportgassen umfassend mindestens eine Abteil- und/oder Verdichtungseinheit zum Abteilen und Verdichten einer vorbestimmten Anzahl an Behältern (3) welche jeweils zu dem späteren Gebinde (2) zusammengefasst werden, wobei Auftragselemente (7) zum Auftragen von Haft- und Klebemittel vorgesehen sind, so dass zumindest einer der Behälter (3) des Gebindes (2) einen Haft- oder Klebemittelauftrag zumindest an einer Kontakt- oder Berührfläche aufweist, umfassend zumindest einen Lineartransporteur (4), auf welchem die das spätere Gebinde (2) bildende Gruppe von Behältern (3) von einer Eingangsseite (5) in Richtung zu einer Austragseite (6) transportierbar sind, wobei die Auftragselemente (7) zum spritzenden oder sprühenden Auftragen eines flüssigen oder fließfähigen Haft- oder Klebemitteln im Bereich des Lineartransporteurs (4) vorgesehen sind, und wobei statische und/oder bewegliche Führungselemente (8) jeweils seitlich des Lineartransporteurs (4) vorgesehen sind, wobei durch die seitlich angeordneten Führungselemente (8) auf die Behälter (3) ein seitlicher Druck erzeugt werden kann, welcher die Behälter (3) des Gebindes (2) quer zur Transportrichtung (10) verdichtet, und wobei Mitnehmerelemente (9) vorgesehen sind, welche jeweils einem Gebinde (2) zugeordnet sind.

2. Vorrichtung nach Anspruch 1, **dadurch gekennzeichnet, dass** das Haft- oder Klebemittel ein niedrigviskoser Klebstoff ist, welcher bevorzugt UVaushärtbar ist.

3. Vorrichtung nach Anspruch 1 oder 2, **dadurch gekennzeichnet, dass** der Lineartransporteur (4) mehrere Transportflächen (11) aufweist, auf die Behälter (3) in Reihen angeordnet aufstehen, wobei ein Spalt (12) zwischen benachbarten Transportflächen (11) angeordnet ist.

4. Vorrichtung nach einem der vorhergehenden Ansprüche, **dadurch gekennzeichnet, dass** mehrere Auftragselemente (7) vorgesehen sind, welche mit ihren Mittelachsen kongruent zueinander angeordnet sind, so dass die Aufnahmeelemente (7) quasi auf einer gemeinsamen Linie angeordnet sind.

5. Vorrichtung nach einem der vorhergehenden Ansprüche, **dadurch gekennzeichnet, dass** die Kontakt- und Berührflächen (13) an dem kopfseitigen Abrollring (15) und/oder an seinem fußseitigen Abrollring (14) angeordnet sind.

6. Vorrichtung nach einem der vorhergehenden Ansprüche, **dadurch gekennzeichnet, dass** jede Kontakt- und Berührfläche der Behälter mit einem Haft- oder Klebemittelauftrag versehen wird.

7. Vorrichtung nach einem der vorhergehenden Ansprüche, **dadurch gekennzeichnet, dass** die Führungselemente (8) mitlaufend oder starr ausgeführt sind.

8. Vorrichtung nach einem der vorhergehenden Ansprüche, **dadurch gekennzeichnet, dass** die Führungselemente (8) das Gebinde (2) seitlich führen, und/oder Verdichten, und/oder mit einer Querkraft beaufschlagen.

9. Vorrichtung nach einem der vorhergehenden Ansprüche, **dadurch gekennzeichnet, dass** die Mitnehmerelemente (9) quer zur Transportrichtung (10) angeordnet sind, und den Lineartransporteur (4) vollständig übergreifen.

10. Vorrichtung nach einem der vorhergehenden Ansprüche, **dadurch gekennzeichnet, dass** die Mitnehmerelemente (9) mit den Führungselementen (8) in Verbindung stehen.

11. Vorrichtung nach einem der vorhergehenden Ansprüche, **dadurch gekennzeichnet, dass** die Mitnehmerelemente (9) starr an den Führungselementen (8) befestigt sind, und die Gebinde (2) in Transportrichtung (10) gesehen vor sich her schieben.

## Claims

1. Device for forming a multi-row packing unit (2) without a film and/or a strapping band, whereby from a stream of containers or a plurality of transport lines comprising at least one compartmentalising and/or compressing unit for compartmentalising and compressing a predetermined number of containers (3) which are combined to form the subsequent packing unit (2), with applicator elements (7) being provided for applying bonding and adhesive agents such that at least one of the containers (3) of the packing unit (2) has an application of bonding or adhesive agent on at least one contact or touching surface, comprising at least one linear transporter (4) on which the group of containers (3) forming the subsequent packing unit (2) can be transported from an inlet side (5) in the direction of an outlet side (6), with the applicator elements (7) for applying a liquid or free-flowing bonding or adhesive by spraying or sprinkling being provided in the region of the linear transporter (4), and with static and/or movable guide elements (8) being each provided at the side of the linear transporter (4), with the laterally arranged guide elements (8) being able to apply a lateral pressure on the containers (3) which compresses the containers (3) of the packing unit (2) square to the transport direction (10), and with entraining elements (9) being provided, each of which is associated with a packing unit (2).

2. The device of claim 1 **characterised in that** the bonding or adhesive agent is a low-viscosity adhesive that is preferably UV-curable.

3. The device of claim 1 or 2 **characterised in that** the linear transporter (4) comprises a plurality of transport surfaces (11) on which the containers (3) stand arranged in rows, there being a gap (12) disposed between adjacent transport surfaces (11).

4. The device of any one of the preceding claims **characterised in that** a plurality of applicator elements (7) are provided which are disposed with their centrelines congruent to one another in such a way that the applicator elements (7) are arranged as it were on a common line.

5. The device of any one of the preceding claims **characterised in that** the contact and touching surfaces (13) are arranged on the head-end roll-off ring (15) and/or on its foot-end roll-off ring (14).

6. The device of any one of the preceding claims **characterised in that** each contact and touching surface of the containers is provided with an application of bonding or adhesive agent.

7. The device of any one of the preceding claims **characterised in that** the guide elements (8) are configured to be travelling or rigid.

8. The device of any one of the preceding claims **characterised in that** the guide elements (8) laterally guide and/or compress and/or impart a transverse force to the packing unit (2).

9. The device of any one of the preceding claims **characterised in that** the entraining elements (9) are arranged square to the transport direction (10) and extend fully across the linear transporter (4).

10. The device of any one of the preceding claims **characterised in that** the entraining elements (9) are connected to the guide elements (8).

11. The device of any one of the preceding claims **characterised in that** the entraining elements (9) are rigidly attached to the guide elements (8) and push the packing unit (2) along before them when seen in transport direction (10).

## Revendications

1. Dispositif de fabrication d'un emballage à plusieurs rangées (2) sans un film et/ou une bande de cerclage, dans lequel à partir d'un flux de récipients ou d'une pluralité de voies de transport comprenant au moins une unité de compartimentage et/ou de compactage pour le compartimentage et le compactage d'un nombre prédéterminé de récipients (3) qui sont regroupés respectivement en un emballage ultérieur (2), dans lequel des éléments d'application (7) sont prévus pour l'application d'adhésifs et de colles, de sorte qu'au moins un des récipients (3) de l'emballage (2) présente une application d'adhésif ou de colle au moins au niveau d'une surface de contact, comprenant au moins un transporteur linéaire (4), sur lequel le groupe de récipients (3) formant l'emballage ultérieur (2) peut être transporté d'un côté entrée (5) en direction d'un côté sortie (6), dans lequel les éléments d'application (7) sont prévus pour l'application par projection ou pulvérisation d'adhésifs ou de colles liquides ou fluides au niveau du transporteur linéaire (4), et dans lequel des éléments de guidage statiques et/ou mobiles (8) sont prévus respectivement sur le côté du transporteur linéaire (4), dans lequel une pression latérale peut être générée sur les récipients (3) par les éléments de guidage (8) agencés sur le côté, laquelle compacte les récipients (3) de l'emballage (2) transversalement à la direction de transport (10), et dans lequel des éléments d'entraînement (9) sont prévus, lesquels sont affectés respectivement à un emballage (2).

2. Dispositif selon la revendication 1, **caractérisé en ce que** l'adhésif ou la colle est une colle à faible viscosité, laquelle est de préférence durcissable aux UV.

3. Dispositif selon la revendication 1 ou 2, **caractérisé en ce que** le transporteur linéaire (4) présente plusieurs surfaces de transport (11), sur lesquelles les récipients (3) sont debout en rangées, dans lequel une fente (12) est agencée entre des surfaces de transport adjacentes (11).

4. Dispositif selon l'une quelconque des revendications précédentes, **caractérisé en ce que** plusieurs éléments d'application (7) sont prévus, qui sont agencés de manière congruente l'un par rapport à l'autre avec leurs axes médians, si bien que les éléments d'application (7) sont agencés quasiment sur une ligne commune.

5. Dispositif selon l'une quelconque des revendications précédentes, **caractérisé en ce que** les surfaces de contact (13) sont agencées au niveau de la bague de roulement côté tête (15) et/ou au niveau de sa bague de roulement côté pied (14).

6. Dispositif selon l'une quelconque des revendications précédentes, **caractérisé en ce que** chaque surface de contact des récipients est dotée d'une application d'adhésif ou de colle.

7. Dispositif selon l'une quelconque des revendications précédentes, **caractérisé en ce que** les éléments de guidage (8) sont réalisés de manière entraînée ou rigide.

8. Dispositif selon l'une quelconque des revendications précédentes, **caractérisé en ce que** les éléments de guidage (8) guident latéralement l'emballage (2), et/ou le compactent, et/ou le sollicitent avec une force transversale.

9. Dispositif selon l'une quelconque des revendications précédentes, **caractérisé en ce que** les éléments d'entraînement (9) sont agencés transversalement à la direction de transport (10), et recouvrent entièrement le transporteur linéaire (4).

10. Dispositif selon l'une quelconque des revendications précédentes, **caractérisé en ce que** les éléments d'entraînement (9) sont en relation avec les éléments de guidage (8).

11. Dispositif selon l'une quelconque des revendications précédentes, **caractérisé en ce que** les éléments d'entraînement (9) sont fixés de manière rigide aux éléments de guidage (8) et poussent les emballages (2) devant eux vu dans la direction de transport (10).
